# EUROPEAN PATENT APPLICATION

(11) **EP 1 953 936 A2**
(43) Date of publication of application: **06.08.2008**
(21) Application number: 08000700.8
(22) Date of filing: 15.01.2008
(51) Int. Cl.: H04H 20/63

(54) **MDU (multi-dwelling unit) broadcasting signal distribution system**

(30) Priority: 02.02.2007 KR 20070010904
(71) Applicant: Kaonmedia Co., Ltd., Sungnam-city Kyonggi do 462-723 (KR)
(72) Inventor: Kwon, Do-Hong, Kyunggi-do 462-723 (KR)
(74) Representative: Weber, Joachim

(57) **Abstract**

The present invention relates to MDU broadcasting signal distribution system, and more specifically, to MDU system that receives a broadcasting signal through a single broadcasting receiving antenna in a multiplex house or building where an IP network is provided, and then transmits the broadcasting signal to each MDU set-top box through the IP network. According to the invention, when an IP network is provided in a multiplex house or building, without installing a dish-shaped antenna or cable, the set-top box is connected to the IP network so as to receive satellite broadcasting, terrestrial DMB, and cable broadcasting. Therefore, broadcasting signals can be effectively distributed to each home such that desired broadcasting can be enjoyed in the home. Further, by applying IGMP, broadcasting can be selectively provided to an MDU set-top box belonging to a specific group.

## Description

### BACKGROUND OF THE INVENTION

### 1. Field of the Invention

The present invention relates to MDU (Multi-Dwelling Unit) broadcasting signal distribution system, and more specifically, to a broadcasting signal distribution system that receives a broadcasting signal through a single broadcasting receiving antenna in a multiplex house or building where an IP network is provided, and then transmits the broadcasting signal to each MDU set-top box through the IP network.

### 2. Description of the Related Art

MDU is an Internet connection device used in a large-scale residence, MDU being capable of connecting users to the Internet by using an existing telephone line or an IP network installed in a multiplex house or building.

Recently, the number of apartments and houses provided with the Internet environment is gradually increasing. Therefore, although an Internet line is not separately installed in each home, the Internet can be used once a computer is connected to a line which has been already provided in the home.

As such, the Internet can be used by using the IP network within the multiplex house. However, in order to receive satellite broadcasting, DMB (Digital Multimedia Broadcasting), and cable broadcasting, a broadcasting receiving antenna needs to be installed separately from the IP network, or a coaxial cable line is separately needed.

Recently, an MDU set-top box has been developed, which can receive a broadcasting signal through the IP network. However, when the MDU set-top box is connected to an Internet line installed in each home so as to receive broadcasting, a broadcasting signal distribution system, which can effectively receive a broadcasting signal and distribute and manage the broadcasting signal, is needed in order to watch satellite broadcasting, DMB, and cable broadcasting in each home through the IP network installed in a multiplex house.

### SUMMARY OF THE INVENTION

An advantage of the invention is that it provides MDU broadcasting signal distribution system that can receive a broadcasting signal through a single antenna, effectively distribute the broadcasting signal to each MDU set-top box installed in a multiplex house or building, and send broadcasting to an MDU set-top box, which belongs to a specific group, by applying IGMP (Internet Group Management Protocol).

According to an aspect of the invention, Multi-dwelling unit (MDU) broadcasting signal distribution system which distributes a broadcasting signal to one or more MDU set-top boxes, comprises: a broadcasting signal receiving unit for receiving a broadcasting signal; an MDU module for demultiplexing MPTS into SPTS, which MPTS is included in the broadcasting signal, for packetizing the demultiplexed broadcasting signal by applying UDP, for allocating IP address to each channel of the broadcasting signal so as to create IP mapping table, and then for packetizing the IP mapping table so as to transmit the packetized IP mapping table and the packetized broadcasting signal in multicast; one or more L3 switches, directly connected to the MDU module, for receiving packet signal from the MDU module, and then for distributing and transmitting the received packet signal; one or more L2 switches, directly connected to MDU set-top boxes through Ethernet network, for receiving the packet signal from the L3 switch, and then for providing the received packet signal to the MDU set-top boxes; and MDU set-top boxes, including: an Ethernet port for receiving packet signal from the L2 switch; an IP mapping table recognition unit for extracting IP mapping table from the packet signal, and when a broadcasting channel is selected by an external operation, for receiving signal corresponding to the IP address of the broadcasting channel by referring to the IP mapping table; a central processing unit for extracting broadcasting signal from the packet signal and then for converting the broadcasting signal into a signal that can be MPEG-processed; a tuner for directly receiving a broadcasting signal from outside; a demultiplexer for demultiplexing the signals provided from the tuner and the central processing unit; a decoder for decoding the broadcasting signal demultiplexed by the demultiplexer; and an A/V output unit for outputting the decoded A/V broadcasting signal to the outside.

According to the invention, when an IP network is provided in a multiplex house or building, the set-top box is connected to the IP network so as to receive satellite broadcasting, terrestrial DMB, and cable broadcasting, without a dish-shaped antenna or cable being installed. Therefore, broadcasting signals can be effectively distributed to each home such that desired broadcasting can be enjoyed in the home.

Further, as IGMP is applied, broadcasting can be selectively provided to an MDU set-top box belonging to a specific group.

### BRIEF DESCRIPTION OF THE DRAWINGS

These and/or other aspects and objects of the present general inventive concept will become apparent and more readily appreciated from the following description of the embodiments, taken in conjunction with the accompanying drawings of which:

Fig. 1 is a block diagram of MDU broadcasting signal distribution system according to an embodiment of the invention;

Fig. 2 is a block diagram of MDU module according to an embodiment of the invention;

Fig. 3 is a block diagram of MDU set-top box according to an embodiment of the invention;

Fig. 4 is a flow chart showing an operation between MDU module and an L3 switch according to an embodiment of the invention;

Fig. 5 is a flow chart showing an operation between an L3 switch and an MDU set-top box according to an embodiment of the invention; and

Fig. 6 is a diagram showing the structure of UDP data including an MPEG-2 TS signal according to an embodiment of the invention.

### DETAILED DESCRIPTION OF THE PREFERRED EMBODIMENTS

Reference will now be made in detail to the embodiments of the present general inventive concept, examples of which are illustrated in the accompanying drawings, wherein like reference numerals refer to like elements throughout. The embodiments are described below in order to explain the present general inventive concept by referring to the figures.

Hereinafter, MDU broadcasting signal distribution system according to an embodiment of the present invention will be described in detail with reference to the accompanying drawings.

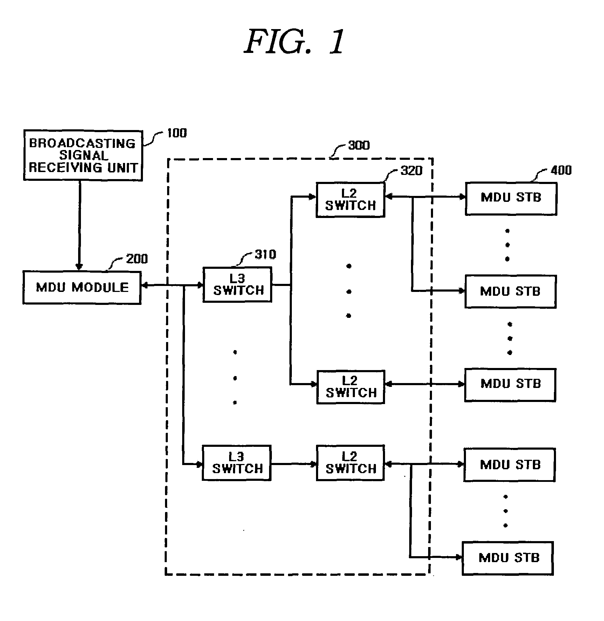

Fig. 1 is a block diagram of MDU broadcasting signal distribution system according to an embodiment of the invention.

As shown in Fig. 1, the MDU broadcasting signal distribution system includes a broadcasting signal receiving unit 100, an MDU module 200, a switch 300, a plurality of MDU set-top boxes 400.

The broadcasting signal receiving unit 100 is a device for receiving a broadcasting signal transmitted from outside, and a dish-shaped antenna or the like for receiving a satellite signal may be used as the broadcasting signal receiving unit 100. The broadcasting signal receiving unit 100 can receive satellite-broadcasting signals such as DVB-S (Digital Video Broadcasting by Satellite), DVB-S2 (Digital Video Broadcasting by Satellite - Second Generation) and so on, terrestrial DMB (Digital Multimedia Broadcasting) signals, and cable-broadcasting signals.

The MDU module 200 demultiplexes a multi-program transport stream (MPTS), which is included in the broadcasting signal provided from the broadcasting signal receiving unit 100, into single-program transport streams (SPTS). That is, the MDU module 200 serves to separate several programs, included in a broadcasting signal, into single program signals.

Further, the MDU module 200 packetizes the demultiplexed broadcasting signal by applying UDP (User Datagram Protocol). UDP is a connectionless protocol which provides a direct way to send and receive information on the Internet. The stability of UDP is lower than that of TCP (Transmission Control Protocol), but the data rate of UDP is higher than that of TCP. Therefore, UDP is more effectively used for providing broadcasting signals in the form of streaming media.

Further, an IP address is allocated to each channel of broadcasting signal so as to create an IP mapping table. When a broadcasting channel is selected by an existing analog method, the broadcasting channel can be discriminated by specifying the frequency thereof. However, to provide a broadcasting signal through the IP network, a different IP address is allocated to each broadcasting channel, and the IP mapping table is created so as to refer to the IP address.

An MDU set-top box which receives broadcasting should select a broadcasting channel by referring to the IP mapping table. Therefore, the IP mapping table should be transmitted to the MDU set-top box. For this, the created IP mapping table is packetized.

Then, both of the packetized broadcasting signal and the packetized IP mapping table are sent to the outside. In this case, the packet signals are sent in a multicast scheme such that only MDU set-top boxes belonging to a specific group which has joined the service can receive the signals.

The switch 300 is roughly divided into L3 and L2 switches 310 and 320.

Each of the L3 switches 310 is directly connected to the MDU module 200 and receives a packet signal from the MDU module 200 so as to distribute and send to the L2 switches 320. Further, each of the L2 switches 320 is connected to set-top boxes 400 through the Ethernet network and receives the packet signal from the L3 switch so as to send to the set-top boxes 400.

At this time, when an L3 switch 310 receives an IGMP customer registration signal from one MDU set-top box 400 through an L2 switch 320, the L3 switch 310 sets the MDU set-top box 400 to a destination and sends a corresponding packet signal to the L2 switch 320 connected to the MDU set-top box 400.

IGMP is a communication protocol for implementing IP multicast. Only when there is a personal computer (PC) which declares to receive multicast packets through IGMP, a router receiving the multicast packets is supposed to send the multicast packets to a LAN segment to which the PC is connected. That is, an L3 switch 310 serving as the router sends the packet signal to only the MDU set-top box 400 which has sent the IGMP customer registration signal.

When the L3 switch 310 transmits the packet signal in the multicast scheme, an additional load is not applied except that the L3 switch 310 sends and receives IGMP control signals to and from the MDU set-top box, because a multicast IP address is fixedly used. Therefore, an amount of load is not larger than when RTSP (Real-Time Streaming Protocol) is used.

The MDU set-top box 400 receives the packet signal from the L2 switch 320 and converts the packet signal into a broadcasting signal to output. Further, the MDU set-top box 400 receives the IP mapping table created from the MDU module 200. Then, when a user selects a broadcasting channel, the MDU set-top box 400 can receive broadcasting signals of the channel through the IP network by referring to the IP mapping table.

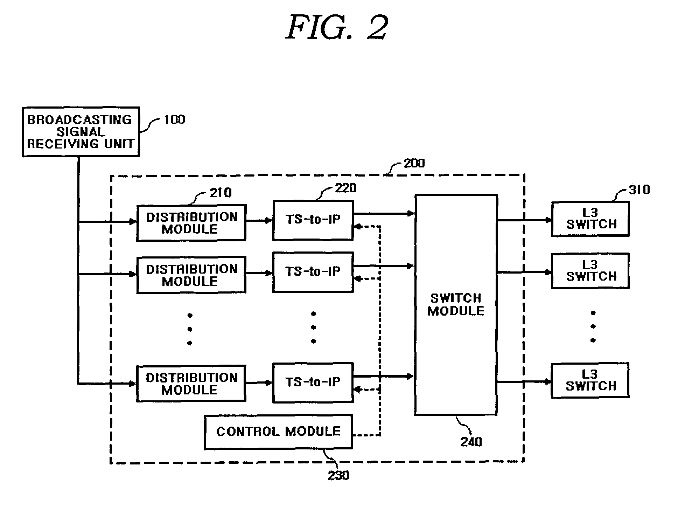

Fig. 2 is a block diagram of the MDU module according to an embodiment of the invention.

As shown in Fig. 2, the MDU module 200 includes a plurality of distribution modules 210, a plurality of TS-to-IP processing modules 220, a control module 230, and a switch module 240.

A broadcasting signal received through the broadcasting signal receiving unit 100 is distributed into the distribution modules 210. In a case of satellite broadcasting, a broadcasting signal is transmitted for each transponder. The signal received by each transponder is processed by a distribution module 210 corresponding to the transponder.

Each of the TS-to-IP processing modules 220 is connected to a corresponding distribution module 210 and receives a broadcasting signal from the distribution module 210. The TS-to-IP processing module 220 includes a demultiplexer and a protocol processing unit. The demultiplexer extracts MPTS from the broadcasting signal input through the distribution module 210 and then demultiplexes the MPTS into SPTS. The protocol processing unit applies UDP to the demultiplexed broadcasting signal so as to create a packet signal.

The control module 230 performs control so as to output the packet signal created from the TS-to-IP processing module 220 to the outside in the multicast scheme.

The switch module 240 is connected to the L3 switches 310 through the IP network and sends packet signals, created from the TS-to-IP modules 220, to the L3 switches 310.

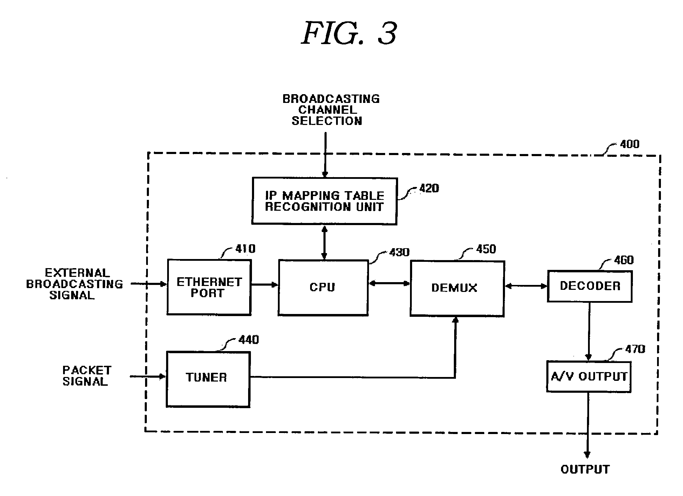

Fig. 3 is a block diagram of the MDU set-top box according to the invention.

As shown in Fig. 3, the MDU set-top box 400 includes an Ethernet port 410, an IP mapping table recognition unit 420, a central processing unit 430, a tuner 440, a demultiplexer 450, a decoder 460, and an A/V (audio/video) output unit 470.

The Ethernet port 410 is connected to an L2 switch 320 through the Ethernet network so as to receive a packet signal.

The IP mapping table recognition unit 420 extracts an IP mapping table from the packet signal received through the Ethernet port 410 and then stores the IP mapping table. Further, when broadcasting channel selection is input by an external operation of a user, the IP mapping table recognition unit 420 receives a signal of IP address corresponding to the selected broadcasting channel by referring to the stored IP mapping table.

The central processing unit 430 extracts a broadcasting signal from a packet signal and then converts the broadcasting signal into a signal which can be MPEG-processed. That is, since the packet signal received through the Ethernet network is such a signal that is divided packets are mixed, the central processing unit 430 recovers the previous signal from the packet signal. Then, the signal is subjected to MPEG decoding such that the broadcasting can be enjoyed.

The tuner 440 not only receives the packetized broadcasting signal through the Ethernet network, but also directly receives a broadcasting signal from outside.

The demultiplexer 450 receives a signal from the tuner 440 and the central processing unit 430 and then demultiplexes the signal. In this case, the signal input to the demultiplexer 450 may be a signal recovered in the form of MPEG2-TS, for example. As the Ethernet port 410 and the tuner 440 within the set-top box 400 are connected to the single demultiplexer 450, the configuration of the set-top box 400 is further simplified.

The decoder 460 MPEG-decodes the broadcasting signal demultiplexed through the demultiplexer 450, thereby obtaining a pure broadcasting signal.

The A/V output unit 470 modulates the decoded broadcasting signal into an A/V signal which can be recognized by people and then outputs the A/V signal to the outside. Accordingly, a user of the MDU set-top box can watch the broadcasting of the selected channel.

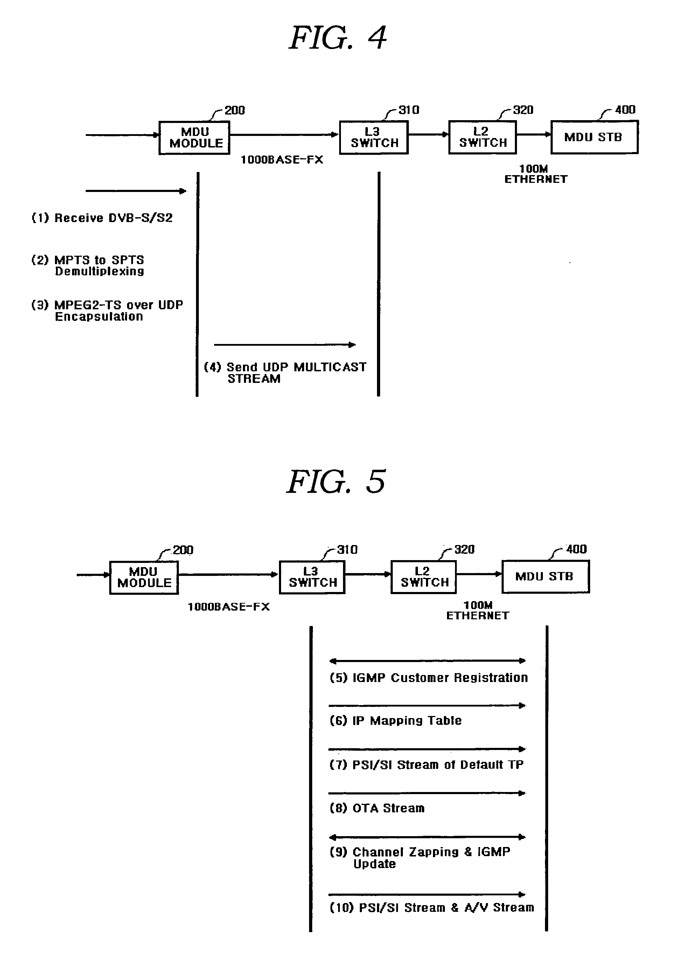

Fig. 4 is a flow chart showing an operation between the MDU module and the L3 switch according to the invention.

As shown in Fig. 4, the MDU module 200 receives a broadcasting signal such as DVB-S or DVB-S2.

Further, MPTS included in the broadcasting signal is demultiplexed into SPTS such that the signal is divided for each program.

Then, the MPEG-TS signal extracted through the demultiplexing is encapsulated in accordance with UDP and is then converted into a packet signal.

Finally, as the signal packetized in accordance with UDP is sent to the outside in the multicast scheme, the operation between the MDU module 200 and the L3 switch 310 is completed. As for an interface through which the packet signal is sent the outside from the MDU module, 1000 BASE-FX is used.

Fig. 5 is a flow chart showing an operation between the L3 switch and the MDU set-top box according to the invention.

As shown in Fig. 5, when the L3 switch 310 receives an IGMP customer registration signal from the MDU set-top box 400, the corresponding packet signal is transmitted to only the MDU set-top box 400 registered by IGMP.

As the L3 switch 310 transmits IP mapping data to the MDU set-top box 400, the MDU set-top box 400 is allowed to select a broadcasting channel.

Then, as the L3 switch 310 transmits to the MDU set-top box 400 a packet signal including broadcasting data and information related to broadcasting, the operation between the L3 switch 310 and the MDU set-top box 400 is completed.

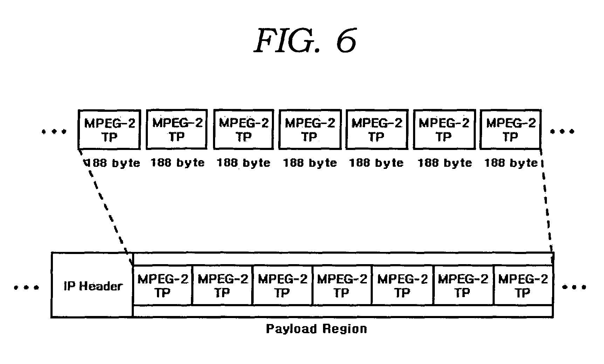

Fig. 6 is a diagram showing the structure of UDP data including an MPEG-2 TS signal according to the invention.

As shown in Fig. 6, the MPEG-2 TS signal has a size of 188 bytes per packet, and seven MPEG-2 TS packets are loaded into a payload region of one UDP packet.

As such, the MDU module 200 binds seven MPEG-2 TS packets into one broadcasting signal and then transmits the broadcasting signal to the MDU set-top box 400 through the IP network.

While the present invention has been described with reference to exemplary embodiments thereof, it will be understood by those skilled in the art that various changes and modifications in form and detail may be made therein without departing from the scope of the present invention as defined by the following claims.

## Claims

1. Multi-dwelling unit (MDU) broadcasting signal distribution system which distributes a broadcasting signal to one or more MDU set-top boxes, which comprises:
a broadcasting signal receiving unit for receiving a broadcasting signal;
an MDU module for demultiplexing MPTS into SPTS, which MPTS is included in the broadcasting signal, for packetizing the demultiplexed broadcasting signal by applying UDP, for allocating IP address to each channel of the broadcasting signal so as to create IP mapping table, and then for packetizing the IP mapping table so as to transmit the packetized IP mapping table and the packetized broadcasting signal in multicast;
one or more L3 switches, directly connected to the MDU module, for receiving packet signal from the MDU module, and then for distributing and transmitting the received packet signal;
one or more L2 switches, directly connected to MDU set-top boxes through Ethernet network, for receiving the packet signal from the L3 switch, and then for providing the received packet signal to the MDU set-top boxes; and
MDU set-top boxes, including: an Ethernet port for receiving packet signal from the L2 switch; an IP mapping table recognition unit for extracting IP mapping table from the packet signal, and when a broadcasting channel is selected by an external operation, for receiving signal corresponding to the IP address of the broadcasting channel by referring to the IP mapping table; a central processing unit for extracting broadcasting signal from the packet signal and then for converting the broadcasting signal into a signal that can be MPEG-processed; a tuner for directly receiving a broadcasting signal from outside; a demultiplexer for demultiplexing the signals provided from the tuner and the central processing unit; a decoder for decoding the broadcasting signal demultiplexed by the demultiplexer; and an A/V output unit for outputting the decoded A/V broadcasting signal to the outside.

2. The MDU broadcasting signal distribution system according to Claim 1, wherein the MDU module includes:
a plurality of distribution modules for receiving the distributed broadcasting signal;
a TS-to-IP processing module, including: a demultiplexer for extracting MPTS from the broadcasting signal input through the distribution module and then for demultiplexing the extracted MPTS into SPTS; and a protocol processing unit for applying UDP to the demultiplexed broadcasting signal so as to create a packet signal;
a control module for controlling so as to let the packet signal, generated from the TS-to-IP processing module, be output to the outside in the multicast scheme; and
a switch module, connected to the L3 switch through an IP network, for transmitting the packet signal to the L3 switch.

3. The MDU broadcasting signal distribution system according to Claim 2, wherein, when an IGMP customer registration signal provided from an MDU set-top box is received through the L2 switch, the L3 switch sets the MDU set-top box to a destination and transmits a corresponding packet signal to the MDU set-top box through the L2 switch.
